# EUROPEAN PATENT SPECIFICATION

(11) **EP 2 886 569 B1**
(45) Date of publication and mention of the grant of the patent: **20.04.2016**
(21) Application number: 13005953.8
(22) Date of filing: 20.12.2013
(51) Int. Cl.: C08G 2/00, C08L 59/00

(54) **'POLYOXYMETHYLENE COMPOSITE WITH REDUCED FORMALDEHYDE EMISSION AND METHOD FOR MAKING AND USE THEREOF'**
"POLYOXYMETHYLEN-ZUSAMMENSETZUNG MIT VERRINGERTER FORMALDEHYDEMISSION UND EIN VERFAHREN ZU SEINER HERSTELLUNG UND VERWENDUNG"
"POLYOXYMÉTHYLÈNE COMPOSITE AVEC ÉMISSION RÉDUITE DE FORMALDÉHYDE ET UN PROCÉDÉ POUR SA PRÉPARATION ET SON UTILISATION"

(43) Date of publication of application: 24.06.2015
(73) Proprietor: Politechnika Poznanska, 60-965 Poznan (PL); Uniwersytet Im Adama Mickiewicza, 61-712 Poznan (PL); Politechnika Rzeszowska im. Ignacego Lukasiewicza, 35-959 Rzeszów (PL)
(72) Inventor: Sterzynski, Tomasz, 61-244 Poznan (PL); Czarnecka-Komorowska, Dorota, 61-255 Poznan (PL); Marciniec, Bogdan, 62-020 Swarzedz (PL); Dutkiewicz, Michal, 61-255 Poznan (PL); Szubert, Karol, 62-280 Kiszkowo (PL); Galina, Henryk, 35-213 Rzeszów (PL); Heneczkowski, Maciej, 35-603 Rzeszów (PL); Oleksy, Mariusz, 35-083 Rzeszów (PL); Oliwa, Rafal, 35-045 Rzeszów (PL)
(74) Representative: Passowicz, Marek

(56) References cited:
- JP-A- 2004 204 167
- US-A1- 2006 052 492

## Description

The present invention relates to a polyoxymethylene composite with reduced formaldehyde emission and a method for making this polyoxymethylene composite and also the use thereof.

### State of the art

A review of literature demonstrates that there are different methods of polyoxymethylene modification for the purpose of reducing the level of formaldehyde emission from its products. For example, the Polish Patent PL-77822 describes a method of POM modification and defines types of chemical compounds suitable for the stabilization of moulding compositions. These are mainly phenols, amines, amidines, hydrazines, ureas and polyamides. The stabilizing effect prevents the depolymerization of the polymers, which consists of the binding of aldehydes which arise during thermal decomposition of chains and their derivative products, and the blocking of final -OH POM groups, which improves thermal stability.

However, phenol and amine stabilizers are often toxic compounds. They can diffuse to the surface of polymer products and they can be washed out of them, which compromises polymer stability and reduces the hygienic characteristics of polymer products. Polyacetal can also be stabilized against oxidation and thermal decomposition using mixtures of compounds of alkaline earth metals with esters of alkyl hydroxy phenyl carboxylic acids and polyhydroxy alcohols, and hydroxy phenyl carboxylic acids. In another European Patent, EP 0605736, an addition of a melamine-formaldehyde resin containing 2.0-10 moles of melamine was used to reduce formaldehyde emission. Reference literature contains abundant information about the toxic effect of melamine on the health of people and animals.

The German Patent No. DE4031794 describes a POM composition with a reduced formaldehyde emission, developed with an addition of cross-linked copolymers containing 95-99% of monoethylene monomers of unsaturated methacrylic acids and vinyl aromatic compounds, and 0.1-5% of polyunsaturated ethylene monomers dispersed in a continuous phase composed of a non-cross-linked polymer containing at least one monomer from the group of acrylic acids or vinyl aromatic derivatives. The composition also contained phenolic antioxidants and carbon black.

The German Patent No. DE 102004008722 describes the use of a compound containing at least a primary, secondary or tertiary amine with nitrogen in the ring as a substance reducing formaldehyde emission. Yet another, Korean, patent describes a composition of polyoxymethylene with good mechanical strength, good sliding properties and low formaldehyde gas emission, containing 100.0 parts of polyacetal, 0.1-5 parts of a polyether-ester block copolymer, 5-50 parts of a thermoplastic polyurethane elastomer, 0.1-5 parts of a copolymer of ethylene with maleic anhydride, and 0.05-2 parts of carboxylic acid hydrazide. Patent No. DE19815663 protects a composition with a low formaldehyde emission, containing a copolymer which, in addition to oxymethylene mers, also contains oxyethylene mers in the amount of 1.5-2.5 mole %, and auxiliary agents including antioxidants, acid deactivators, etc. Plates (1 mm thick), injection-moulded from this composition, had a formaldehyde emission level not exceeding 10 mg CH₂O/1kg POM, assessed in accordance with the standard VDA 275.

The US Patent No. US 7,645,821 relates to set of stabilizers ensuring good tribological properties and reduced formaldehyde emission from POM products, comprising 0.01-0.5 wt% of a cyclic compound containing at least one nitrogen atom in the ring, 0.05-1 wt% of an ester of a polyhydric alcohol with at least one (C24-C32) fatty acid, admixed to POM. Formaldehyde emission from the composition, measured according to VDA 275 testing standard, was less than 30 mg/kg.

In the Publication No. 2004-4204167 A of the Japanese Patent Application No. 2002-2377590 is presented a colorable polyacetal resin composition with high flame retardancy. This composition is constituted of the polyacetal resin, at least one flame-retardant selected from a (hypo)phosphite [a metal (hypo)phosphate, or the like] and phosphide (a metal phosphide, or the like), and at least one flame-retardant auxiliary selected from an aromatic compound and a basic nitrogen-containing compound.

In the Publication No. US 2006/0052492 A1 of the US Patent Application No. 10/538,121 is also presented a polyacetal resin composition which comprise: about 0.001 to 5 parts by weight of an antioxidant and about 0.001 to 10 parts by weight of a guanamine compound having at least one unit represented by the following formula (1) or a salt thereof relative to 100 parts by weight of a polyacetal resin are mixed and constitute a resin composition.

International literature contains many reports on polyoxymethylene-based composites which are characterized by reduced formaldehyde emission in relation to unmodified POM. There are, however, no data on the use of silsesquioxane derivatives as agents reducing formaldehyde emissions.

### Purpose and the nature of the invention

The purpose of the present invention is to prepare a polyoxymethylene composite with reduced formaldehyde emission and a method of making the same. In particular, the aim of invention was the use of POSS derivates as additives - improving the strength properties and limiting the emission of formaldehyde from POM.

A composite of polyoxymethylene (formaldehyde, polyacetal, POM) with reduced formaldehyde emission is stabilized by means of silsesquioxane derivatives of diverse spatial structures and the general chemical formula of:

((RSiO_{1,5})ₙ(R¹SiO_{1,5})₈₋ₙ)ₘ (Formula 1)

where **R** represents an amine group (NH₂) or a diaminoethyl group (NH₂CH₂CH₂NH) bound to a silicon atom with an alkyl chain of 2-8 carbon atoms; **R¹** represents a methyl, ethyl, isobutyl, isooctyl, cyclohexyl, cyclopentyl or phenyl group; **n** and **m** are natural numbers; **n** can assume values from the range between 1 and 8 and m can assume values from the range between 1 and 100.

Silsesquioxanes and polysilsesquioxanes (POSS), used for the preparation of the polyoxymethylene composite according to the invention, may have either a single spatial structure of silsesquioxane cage when **m** = 1, silsesquioxane ladder, eg. where **m** has a value greater than 2 or silsesquioxane resin when **m** is greater than 2.

The following features:
- the POSS core size of about 0.5 nm for octasilsesquioxanes,
- the entire molecule size, ranging from 1 to 3 nm, depending on the nature of the substituents, compared to the average size of the polymer chains in the materials,
- the ability to use functional groups for precise settlement of POSS-es in the matrix polymer,
have a positive influence on many of the physical characteristics of the "filled" materials, such as: increasing of the decomposition temperature and glass transition temperature, increasing the fire resistance, the extension of the operating temperature range of the polymer, lowering of thermal insulation, lowering the viscosity and density of the polymers, improvement in gas-tightness , resistance to oxidation and mechanical properties. Apart from the positive influence on the physical and mechanical properties of the composite according to the invention, silsesquioxane derivatives bind formaldehyde through their amino groups, which may be released by degradation processes, leading to the reduction of its emission.

The present invention relates to a polyoxymethylene composite with a reduced formaldehyde emission, wherein it is comprised of 0.01-10 wt%, advantageously between 0.2 and 0.9 wt%, of silsesquioxane derivatives with the general formula 1, and a method for making the polyoxymethylene composite consists in that dried polyoxymethylene, in room temperature, in the form of granulate, advantageously in the form of powder, is combined with 0.01-10 wt%, advantageously between 0.2 and 0.9 wt%, of silsesquioxane derivatives with the general formula 1, whereupon the mixture is transferred into an extruder and plasticized in a temperature of 160-190°C, following which the mixture is cooled down in water until the completion of the crystallization process, and the resulting crystallized composite of polyoxymethylene is granulated in room temperature. Then the composite is dried again and injected in a temperature of 160-200°C into a mould with a temperature of 60-100°C.

It is preferable that the modifiers are derivatives of polyhedral oligo-silsesquioxanes or spherosilicates (POSS), between 0.05 and 2 wt%, whereby a POSS molecule contains from one to eight substituents ending with amine groups.

It is also preferable that the derivatives (POSS) are resins produced in the reaction of hydrosilylation.

Furthermore it is preferable that polyoxymethylene is dried for 4 hours in temperature 120°C, whereupon after the introduction of a modifier in a concentration from 0.05 to 2 wt% both components are mixed until dry premixes are obtained.

The application of the polyoxymethylene composite as claimed in claim 1 for the production of structural elements of high strength, reduced emission of unpleasant odours caused by the diffusion of formaldehyde or other volatile organic compounds, particularly in interiors of cabins of cars, buses, railway cars, ships, airplanes, etc.

By using a solution according to the present invention the following technical and functional effects were achieved:
- the finished composites are characterized by significantly reduced emissions of formaldehyde, trioxane and total content of volatile organic compounds (VOC) in polyoxymethylene,
- the finished composites are characterized by a significantly higher short-term strength and impact resistance, which expands their range of applications as structural elements,
- the materials can be produced using standard tools designed for the extrusion of plastics,
- the materials have a broad range of potential applications: interiors of cabins of cars, buses, ships, airplanes, etc. as structural elements of high strength, reduced emission of unpleasant odours caused by the diffusion of formaldehyde or other volatile organic compounds.

The studied composites were obtained from the following starting materials:
- polyoxymethylene copolymer available under the commercial name of Tarnoform 300, manufactured by Azoty Tarnów in Tarnów-Mościce (with the density p = 1.41 g/cm³, mass melt flow rate MFR = 9.0 g/10 min), tested in the following conditions: 190°C; 2.16 kg,
- N-(2-aminoethyl-3-aminopropyl)octasilsesquioxane obtained by hydrolytic condensation of N-(2-aminoethyl-3-aminopropyl)trimethoxysilane at the Faculty of Chemistry, Adam Mickiewicz University in Poznań,
- hepta(isopropyl)mono(3-aminopropyl)octasilsesquioxane obtained by condensation of 3-aminopropyltrimethoxysilane and hepta(isopropyl)trisilanol at the Faculty of Chemistry, Adam Mickiewicz University in Poznań,
- silsesquioxane resins containing amine groups obtained by hydrolytic condensation of N-(3-aminoethyl-3-aminopropyl)trimethoxysilane or 3-aminopropyltrimethoxysilane at the Faculty of Chemistry, Adam Mickiewicz University in Poznań.

### Examples

The invention is described in more detail with the examples presented below:

### Example 1

A polyoxymethylene composite containing 0.05-0.2 wt% of N-(2-aminoethyl-3-aminopropyl)octasilsesquioxane was obtained by the method of extrusion in the following manner: the granulate of standard polyoxymethylene was dried in a temperature of 120±5°C for 4 hours in a chamber dryer until a specific moisture level was achieved and then, in room temperature, it was mixed thoroughly with 0.05, 0.1 and 0.2 wt% of N-(2-aminoethyl-3-aminopropyl)octasilsesquioxane. The mixture was transferred into an extruder and mixed in the molten state in a twin screw extruder with the screw diameter of 30 mm and the screw length-to-diameter ratio L/D=40 (Maris TM30VI type, Italy), using the following parameters: cylinder zone temperatures: 120, 165, 155, 155°C; back pressure 3 bar; rotational speed of the screw: 80-85 rpm; temperatures of the melt at the head inlet: 181, 179, 178°C; negative pressure of degasification: 50 mm Hg. The resulting mixture was cooled in a cooling bath to achieve an appropriate degree of crystallinity, and then granulated in a granulator. The composition thus prepared in the form of granulate was again subjected to drying and injected to obtain measurement pieces (plates with the dimensions of 40 mm x 120 mm x 1 mm), under the following injection parameters: temperatures of the cylinder/extruder nozzle: 180, 190, 195/195°C; temperature of the mould: 95°C; injection/packing/plastification pressure: 1050/1056/50 bar; injection speed: 90 mm/s; packing/cooling/cycle time: 25/20/55 s. Composite plates, in colours ranging from slightly yellow to yellow/orange, were tested to determine formaldehyde content in accordance with the standard VDA 275. Table 1 lists formaldehyde emission values determined for the polyoxymethylene composite.

**Table 1 Values of formaldehyde emission from the polyoxymethylene composites**

| Type of plastic | POSS content in POM, wt% | Formaldehyde emission, mg/kg |
|---|---|---|
| Polyoxymethylene | 0.0 | 29.5 |
| Composite A | 0.05 | 10.4 |
| Composite B | 0.10 | 5.2 |
| Composite C | 0.20 | 2.4 |

### Example 2

A polyoxymethylene composite containing 0.05-0.5 wt% of hepta(isopropyl)mono(3-aminopropyl)octasilsesquioxane was obtained by the method of extrusion in the following manner: polyoxymethylene was dried in a temperature of 120±5°C for 4 hours in a chamber dryer, mixed with 0.05, 0.10 and 0.5 wt% of hepta(isopropyl)mono(3-aminopropyl)octasilsesquioxane and ground in a fast-rotating grinder to obtain the grain size of 1 mm. The components were then mixed in the Grindomix GM200 mill from Retsch at the speed of 2,000 rpm for 3 minutes. The compositions thus prepared were transferred into an extruder and mixed in the molten state using an extruder with the screw diameter of 25 mm and the screw length-to-diameter ratio L/D=34 (W25-30D type, from Metalchem, Toruń), with an extrusion head having a nozzle with a round cross-section. The process of composite extrusion was performed in the temperature range of 175-187°C, with the rotational speed of the screw equal to 31 rpm.

The resulting composition was cooled in a water bath and then granulated using the cold method in a granulator (GL65 type from Remi-Plast, Czerwonak, Poland). A polyoxymethylene composition in the form of granulate was thus obtained, which constitutes the finished starting material that can be used for processing by extrusion, injection moulding or pressing. The resulting POM composition with the melt flow index MFI= 8 g/10 min, in the form of granulate, was then dried again in a temperature of 120±5°C for 4 hours and injected with a view to obtaining measurement pieces, under the following parameters: temperature of the extruder nozzle: 200±5°C; temperature of the mould: 70±5°C; injection pressure: 560 bar; packing pressure: 500 bar; the packing/cooling/cycle times depended on the size of the moulded shape. The shapes obtained from white composites were tested to determine the content of formaldehyde in accordance with a relevant standard. Table 2 lists values of formaldehyde emissions determined for the polyoxymethylene composite.

**Table 2 Values of formaldehyde emission from the polyoxymethylene composites**

| Type of plastic | POSS content in POM, wt% | Formaldehyde emission, mg/kg |
|---|---|---|
| Polyoxymethylene | 0.0 | 29.5 |
| Composite A | 0.05 | 21.0 |
| Composite B | 0.1 | 18.1 |
| Composite C | 0.5 | 17.0 |

### Example 3

A polyoxymethylene composite containing 0.3 wt% of silsesquioxane resins (OSS) was obtained according to the following procedure. Polyoxymethylene granulate was dried in a temperature of 120±5C for 4 hours in a chamber dryer and combined with 0.3 wt% of silsesquioxane resins. POM mixtures with these modifiers were made in the molten state in a co-rotating twin screw extruder with the screw diameter of 30 mm and the screw length-to-diameter ratio L/D=40 (Maris TM30VI type, Italy), under the following parameters: cylinder zone temperatures: 120, 165, 155, 155°C; back pressure 3 bar; temperatures of the melt at the head inlet: 181, 179, 178°C; negative pressure of degasification: 50 mm Hg. The resulting mixture was cooled in a cooling bath to achieve an appropriate degree of crystallinity, and then granulated in a granulator. The composition thus prepared in the form of granulate was again subjected to drying and injected to obtain measurement pieces (plates with the dimensions of 40 mm x 120 mm x 1 mm), using the following injection parameters: temperatures of the cylinder/extruder nozzle: 180, 190, 195/195°C; temperature of the mould: 95°C; injection/packing/plastification pressure: 1050/1056/50 bar; injection speed: 90 mm/s; packing/cooling/cycle time: 25/20/55 s. Composite pieces, in colours ranging from slightly yellow to yellow/orange, were tested to determine formaldehyde content in accordance with the standard VDA 275. Table 3 lists values of formaldehyde emissions determined for the POM polyoxymethylene composite.

The specific aspect of this patent application is that the process of making polyoxymethylene composites by the method of mixing in the molten state is performed in the presence of modifiers (silsesquioxane derivatives containing amine groups), which significantly reduce the emission of formaldehyde from polyoxymethylene.

**Table 3 Values of formaldehyde emission from the polyoxymethylene composite**

| Type of plastic | OSS content in POM, wt% | Formaldehyde emission mg/kg |
|---|---|---|
| Polyoxymethylene | 0.0 | 29.5 |
| Composite A | 0.3 | 0.9 |

## Claims

1. A polyoxymethylene composite with a reduced formaldehyde emission contains between 0.01 and 10 wt%, advantageously between 0.2 and 0.9 wt%, of silsesquioxane derivatives of diverse spatial structures and the general chemical formula of ((RSiO_{1,5})ₙ(R¹SiO_{1,5})₈₋ₙ)ₘ, in which R represents an amine group (NH₂) or a diaminoethyl group (NH₂CH₂CH₂NH) bound to a silicon atom with an alkyl chain of 2-8 carbon atoms, R¹ represents a methyl, ethyl, isobutyl, isooctyl, cyclohexyl, cyclopentyl or phenyl group, **"n"** and **"m"** are natural numbers, **"n"** can assume values from the range between 1 and 8 and **"m"** can assume values from the range between 1 and 100.

2. A method for making a polyoxymethylene composite, **wherein** the dried polyoxymethylene is modified with silsesquioxane derivatives having amine substituents by mixing in the molten state in temperatures ranging from 160°C to 200°C using single- or twin-screw extruders, whereupon the resulting composition is cooled in a water bath until the completion of the crystallization process, following which it is granulated in the room temperature (R.T.) until granulate in a specific shape is obtained.

3. The method according to claim 2, **characterized in that** the dried polyoxymethylene, modified in room temperature (R.T.) in the form of granulate, advantageously in the form of powder, is combined with 0.01-10 wt%, advantageously between 0.2 and 0.9 wt%, of silsesquioxane derivatives with the general formula 1, whereupon the mixture is transferred into an extruder and plasticized in a temperature of 170-190°C, whereupon the mixture is cooled down in water until the completion of the crystallization process, and the obtained crystallized composite of the polyoxymethylene is granulated in room temperature (R.T.), and then the composite is dried again and injected in a temperature of 170-200°C into a mould with a temperature of 60-100°C.

4. The method according to claim 2 or 3, **characterised in that** the modifiers are derivatives of polyhedral oligo-silsesquioxanes or spherosilicates (POSS), between 0.05 and 2 wt%, whereby a POSS molecule contains from one to eight substituents ending with amine groups.

5. The method according to claim 4, **characterised in that** the derivatives (POSS) are resins produced in the reaction of hydrosilylation.

6. The method according to claims from 2 to 5, **characterised in that** polyoxymethylene is dried for 4 hours in a temperature 120°C, whereupon after the introduction of a modifier in a concentration from 0.05 to 2 wt% both components are mixed until dry premixes are obtained.

7. An application of the polyoxymethylene composite as claimed in claim 1 for the production of structural elements of high strength, reduced emission of unpleasant odours caused by the diffusion of formaldehyde or other volatile organic compounds, particularly in the interiors of cabins of cars, buses, railway cars, ships, airplanes, etc.

## Patentansprüche

1. Die Polyoxymethylen-Zusammensetzung mit verringerter Formaldehydemission enthält von 0,01 bis 10 Gew.-% vorzugsweise von 0,2% bis 0,9 Gew.-% Silsesquioxan-Derivate mit differenzierter räumlicher Struktur, mit allgemeiner Formel: ((RSiO_{1,5})ₙ(R¹SiO_{1,5})₈₋ₙ)ₘ, in der R die Aminogruppe (NH₂) bzw. Diaminoethylgruppe (NH₂CH₂CH₂NH) bedeutet, verbunden mit einem Silicium-Atom durch eine Alkylkette mit einer Länge von 2 bis 8 Kohlenstoffatomen, R¹ die Methyl-, Ethyl-, Isobutyl-, Isooktyl-, Cyclohexyl-, Cyclopentyl- bzw. Phenylgruppe bedeutet, "n" und "m" natürliche Zahlen sind, wobei "n" die Werte aus dem Bereich von 1 bis 8 einnehmen kann und "m" die Werte aus dem Bereich von 1 bis 100 einnehmen kann.

2. Die Methode der Erstellung der Polyoxymethylen-Zusammensetzung mit verringerter Formaldehydemission, **worin** das durchgetrocknete Polyoxymethylen durch Silsesquioxan-Derivate mit Amin-Substituenten im Wege der Rührung im geschmolzenen Zustand in Temperaturen von 160°C bis 200°C, unter Anwendung von Einschnecken- und/oder Zweischneckenextrudern modifiziert wird, anschließend wird die erhaltene Komposition im Wasserbad gekühlt bis zum Abschluss des Kristallisierungsprozesses, anschließend granuliert in der Raumtemperatur (R.T.) bis zur Erreichung der bestimmten Granulatform.

3. Die Methode nach Anspruch 2, **dadurch gekennzeichnet, dass** dem getrockneten Polyoxymethylen, modifiziert in der Raumtemperatur (R.T.) zur Granulatform, vorzugsweise zur Pulverform, 0,01-10 Gew.-%, vorzugsweise 0,2% do 0,9 % Silsesquioxan-Derivate mit allgemeiner Formel 1 beigemischt wird, anschließend das Gemisch in den Extruder dosiert und in der Temperatur von 170-190°C plastifiziert wird, woraufhin das Ganze im Wasser bis zum Abschluss des Kristallisierungsprozesses abgekühlt wird, und die erhaltene auskristallisierte Polyoxymethylen-Zusammensetzung in der Raumtemperatur (R.T.) granuliert wird, und anschließend die Zusammensetzung erneut in der Temperatur von 170-200°C bis zu einer Form in der Temperatur von 60-100°C getrocknet wird.

4. Die Methode nach Anspruch 2 bzw. 3, **dadurch gekennzeichnet, dass** als Modifikator die Derivate der vielflächigen Oligosilsesquioxane bzw. Sphärosilicate (POSS) von 0,05 bis 2 Gew.-% eingesetzt werden, wobei das POSS-Teilchen von einem bis acht mit Aminogruppen abgeschlossene Substituenten beinhaltet.

5. Die Methode nach Anspruch 4, **dadurch gekennzeichnet, dass** die Derivate (POSS) die in der Hydrosilylierung-Reaktion entstandenen Harze sind.

6. Die Methode nach Ansprüchen von 2 bis 5, **dadurch gekennzeichnet, dass** das Polyoxymethylen 4 Stunden lang in der Temperatur von 120°C getrocknet wird, woraufhin, nach Einführung des Modifikators mit der Konzentration von 0,05% bis 2 Gew.-%, die beiden Komponenten bis zur Erreichung des Trockengemischs gerührt werden.

7. Der Einsatz der Polyoxymethylen-Zusammensetzung nach Anspruch 1 zur Herstellung von Konstruktionselementen mit hoher Beständigkeit, reduzierter Emission übler Gerüche aus diffundierendem Formaldehyd bzw. sonstiger flüchtiger organischer Verbindungen, insbesondere im Inneren der Auto-, Bus-, Bahn-, Schiffs-, Flugzeugfahrgasträume, etc.

## Revendications

1. Le polyoxyméthylène composite avec émission réduite de formaldéhyde contient de 0,01 à 10% en poids, avantageusement de 0,2% à 0,9% des dérivés de silsesquioxane à structure spatiale diversifiée et la formule chimique générale ((RSiO_{1,5})ₙ(R¹SiO_{1,5})₈₋ₙ)ₘ, dans laquelle R représente un groupe d'amine (NH₂) ou un groupe 2-aminoéthyle (NH₂CH₂CH₂NH) lié à un atome de silicium par une chaîne alkyle de 2 à 8 atomes de carbone, R¹ représente un groupe de méthyle, d'éthyle, d'isobutyle, d'iso-octyle, de cyclohexyle, de cyclopentyle ou un groupe de phényle, « n » et « m » sont des nombres naturels, « n » peut prendre des valeurs comprises entre 1 et 8, et «m» peut prendre des valeurs de à 1 à 100.

2. Le procédé de préparation du polyoxyméthylène composite avec émission réduite de formaldéhyde, **caractérisé en ce que** le polyoxyméthylène séché est modifié par des dérivés de silsesquioxane ayant des substituants d'amine dans le procédé de mélange à l'état fondu à des températures allant de 160°C à 200°C en utilisant des extrudeuses mono ou double-vis, ensuite la composition résultante est refroidie dans un bain d'eau jusqu'à l'achèvement du procédé de cristallisation, ensuite il est granulé à la température ambiante (TA) jusqu'à ce que des granulés d'une forme particulière soient obtenus.

3. Le procédé suivant la revendication 2, **caractérisé en ce que** le polyoxyméthylène séché, modifié à la température ambiante (TA) sous la forme de granulés, avantageusement sous forme de poudre, on ajoute de 0,01 à 10% en poids, avantageusement entre 0,2 et 0,9% en poids, de dérivés de silsesquioxane ayant la formule générale 1, ensuite le mélange est transféré dans une extrudeuse et plastifié à une température de 170-190°C, ensuite l'ensemble est refroidi à l'eau jusqu'à l'achèvement du procédé de cristallisation, et le composite cristallisé obtenu du polyoxyméthylène est granulé à la température ambiante (TA) et puis le composite est séché à nouveau et on l'injecte à la température de 170-200°C dans un moule ayant la température de 60-100°C.

4. Le procédé suivant la revendication 2 ou 3, **caractérisé en ce que** les modificateurs sont des dérivés d'oligo-silsesquioxane polyédrique ou sphéro-silicates (POSS), entre 0,05 à 2% en poids, pourtant une molécule de POSS contient de un à huit substituants terminés par des groupes d'amines.

5. Le procédé suivant la revendication 4, **caractérisé en ce que** les dérivés (POSS) sont des résines produites dans la réaction d'hydrosilylation.

6. Le procédé suivant la revendication de 2 à 5, **caractérisé en ce que** le polyoxyméthylène est séché pendant 4 heures à une température de 120°C, ensuite, après l'introduction d'un modificateur à une concentration de 0,05 à 2% en poids, les deux composants sont mélangés jusqu'à ce que les prémélanges secs soient obtenus.

7. L'utilisation du polyoxyméthylène composite suivant la revendication 1 pour la fabrication des éléments constructifs de grande résistance, à émission réduite des odeurs désagréables provenant de la diffusion de formaldéhyde et d'autres composés organiques volatils, en particulier à l'intérieur de cabines de voitures, des autobus, des voitures de chemin de fer, des navires, des avions, etc.
